# EUROPÄISCHE PATENTSCHRIFT

(11) **EP 1 211 279 B1**
(45) Veröffentlichungstag und Bekanntmachung des Hinweises auf die Patenterteilung: **22.03.2006**
(21) Anmeldenummer: 01127119.4
(22) Anmeldetag: 15.11.2001
(51) Int. Cl.: C08J 9/00, C08G 77/46, C08L 75/04

(54) **Verwendung von Mischungen organofunktionell modifizierter Polysiloxane mit verzweigten Alkoholen bei der Herstellung von Polyurethanweichschäumen**
Use of blends of organofunctional modified polysiloxanes with branched alcohols in the preparation of flexible polyurethane foams
Utilisation de mélanges de polysiloxanes organofonctionnels avec des alcools ramifiés pour la préparation de mousses de polyuréthanne flexibles

(30) Priorität: 28.11.2000 DE 10059057
(43) Veröffentlichungstag der Anmeldung: 05.06.2002
(73) Patentinhaber: Goldschmidt GmbH, 45127 Essen (DE)
(72) Erfinder: Borgogelli, Rob, Midlothian, Virginia, USA 23113 (US); Eyrisch, Oliver, Dr., 45131 Essen (DE)

(56) Entgegenhaltungen:
- EP-A- 1 029 878
- FR-A- 1 313 814
- GB-A- 994 396

## Beschreibung

Die Erfindung betrifft die Verwendung von Mischungen organofunktionell modifizierter Polysiloxanen mit verzweigten Alkoholen bei der Herstellung von Polyurethanweichschäumen.

Polysiloxan-polyoxyalkylen-Blockcopolymere, im folgenden Polyethersiloxane genannt, werden bei der Herstellung von Polyurethanschäumen einsetzt. Sie ermöglichen die Ausbildung einer gleichmäßigen, feinen Porenstruktur und stabilisieren den Schaum während des Herstellungsprozesses.

Je nach Herstellungsverfahren und je nachdem welche weiteren Rohstoffe verwendet werden, erhält man jedoch in manchen Fällen eine nur unzureichende Zellfeinheit. Beispielsweise führt die Verwendung von hoch Polypropylenoxid-haltigen Polyolen häufig zu einer tendenziell gröberen Zellstruktur.

Auch maschinelle Gegebenheiten können zu einer unregelmäßigen beziehungsweise groben Zellstruktur führen, beispielsweise bei Verwendung von Niederdruckmischköpfen oder gar bei einfacher Verrührung der Rohstoffe bei Normaldruck.

Auch die Verwendung alternativer Treibmittel, insbesondere flüssiges CO₂, stellt besonders hohe Anforderungen an das Polyethersiloxan hinsichtlich des Erreichens einer feinporigen Zellstruktur. Wegen der vorteilhaften Ökobilanz hat diese sogenannte Flüssig- CO₂-Technologie in den vergangenen Jahren zunehmend an Bedeutung erlangt. Bei diesem Verfahren wird unter Druck stehendes CO₂ - neben dem durch eine chemische Reaktion der verwendeten Isocyanate mit Wasser entstehenden CO₂ - als Treibgas verwendet. Diese Technologie wird beispielsweise beschrieben in EP-A-0 645 226. Die Einführung dieser Technologie hat aber gezeigt, dass das spontan einsetzende Aufschäumen des unter Druck stehenden CO₂ beim Austrag der Reaktionsmischung erhöhte Anforderungen an die Zellbildungscharakteristik der in der Schaumformulierung verwendeten Komponenten stellt. Dieses ist auch erklärlich, da die früher im Zeitraum von mehreren Sekunden langsam einsetzende Isocyanat-Wasser-Reaktion nur zu einer langsamen Gassättigung der flüssigen Phase und damit dem langsamen Ausbilden von Gasblasen - dem sogenannten Ancremen des Schaumes - führte.

Dieser früher langsam ablaufende Prozeß, der die Grundlage für die morphologischen Eigenschaften - Zellenzahl und Zellgrößenverteilung des entstehenden Schaumes - legt, ist jetzt auf Bruchteile von Sekunden zusammengeschrumpft, nämlich dem Zeitrahmen, den die Rohmaterialien benötigen, um von dem unter Druck stehenden Mischkopf einer Verschäumungsmaschine und der anschließenden Auftragsvorrichtung bis auf die Umgebungsdrücke von einer Atmosphäre zu gelangen. Dabei bildet sich, ähnlich wie bei einem Rasierschaum aus einer Spraydose, spontan ein Schaum durch verdampfendes flüssiges CO₂. Das auftretende Fehlerbild bei derartigen Schäumen waren ungleichmäßige, teilweise vergröberte Zellen innerhalb der Schaumstruktur, wobei der Einsatz geeigneter Schaumstabilisatoren durchaus hilfreich zur Minimierung dieser Fehlerbilder sein kann. Dennoch ergibt sich oftmals das Problem, dass in Abhängigkeit von Umgebungsparametern (Druck, Rohmaterialtemperaturen, Verwendung von Festkörpern in der Formulierung) selbst nach dem derzeitigen Stand der Technik gut geeignete Stabilisatoren, z.B. in US-A-5 357 018 oder US-A-5 321 051 beschrieben sind, keine völlig fehlerfreien Schäume produzieren.

Grundsätzlich gelingt eine Verfeinerung der Zellstruktur durch Erhöhung der Einsatzmenge des Polyethersiloxans, jedoch ist der Spielraum zur Erhöhung begrenzt, einerseits wegen der dann eintretenden Begleiterscheinung der Überstabilisierung, die zu einer zu hohen Geschlossenzelligkeit, in Extremfällen sogar zu einem Schrumpf des Schaumes führen kann, andererseits wegen der damit einhergehenden ungünstigen Ökonomie.

Die prinzipielle Verwendung von Zusätzen zu Polyethersiloxanen bzw. Weichschaumformulierungen zur Zellverfeinerung ist bereits bekannt.

So beschreibt EP-A-0 900 811 die Verwendung von cyclischen Carbonaten in Weichschaumformulierungen als Mittel zur Zellverfeinerung. Die cyclischen Carbonate sind allerdings erst in Mengen in der Größenordnung des Polyethersiloxans wirksam und besitzen ferner den Nachteil als flüchtige Komponenten aus dem fertigen Schaum auszudünsten.

EP-A-0 976 781 beschreibt die kombinierte Anwendung von Polyethersiloxanen mit Salzen von organischen Säuren. Die Zellverfeinerung tritt schon bei geringen Konzentrationen auf, die Löslichkeit der Salze ist aber verhältnismäßig eingeschränkt, was die Verwendung von Wasser als Kosolvenz nötig macht. Die Anwendung bleibt daher nur auf hydrolysestabile Polyethersiloxane beschränkt. Ferner trägt Wasser zur Treibreaktion mit Isocyanat bei und muß je nach Einsatzkonzentration gegebenenfalls bei der Formulierungsberechnung berücksichtigt werden.

Die EP-A-1 029 878 betrifft die Verwendung von verbesserten Polysiloxan-Polyoxyalkylen-Blockcopolymeren als Additive bei der Herstellung von Polyurethanschäumen, wobei die Verbesserung darin besteht, dass durch die Verwendung von sowohl Si-C- als auch Si-O-C-verknüpften Siliconpolyether-Blockcopolymeren in einer Mischung besondere Eigenschaftskombinationen von Aktivität und Zellfeinheit ermöglicht werden.

US-A-4 520 160 beschreibt ein Verfahren zur Herstellung von Polyethersiloxanen in Gegenwart von Fettalkoholen. Letztere verhindern eine Gelbildung während der Herstellung. Die resultierenden Produkte werden vorzugsweise als Emulgatoren in kosmetischen Anwendungen eingesetzt. Die Schrift erwähnt ferner durch ein Ausführungsbeispiel dokumentiert die prinzipielle Möglichkeit des Einsatzes in Polyurethanschäumen wobei Flüssig-CO₂-Anwendungen hierbei nicht berührt sind. Der Einsatz der beschriebenen Produkte hat demnach keinen negativen Einfluss bei den erwähnten Anwendungen. Den Angaben zufolge wird nach Durchführung des beschriebenen Versuches bei Verwendung einer Mischung eines Polyethersiloxans mit SiC-Struktur und Isostearylalkohol ein offenzelliger Schaum erhalten, der in seinen Eigenschaften gleich oder besser sei, wie ein Schaum, der aus einem Vergleichsversuch resultiere, der anstatt Isostearylalkohol Isopropylalkohol enthält. Spezifische Kriterien zur Beurteilung werden nicht genannt. Insbesondere Angaben zur Zellfeinheit fehlen. Der Schaum wird lediglich durch die Charakterisierung "good foam" beschrieben. Die Analyse des Beispieles läßt weitgehend offen, um welche Klasse von Polyurethanverbindungen es sich hierbei handelt, da beispielsweise der Polyoltyp nicht definiert ist. Als Katalysator wird die zinnorganische Verbindung Dibutylzinndilaurat (DBTDL) verwendet, was auf eine Kaltblockschaumanwendung hindeuten könnte (engl. "HRslabstock"). DBTDL wird häufig in Weichschaumanwendungen ausschließlich im Kalt- (HR) und nicht im Heißschaumbereich (engl. "Conventional slabstock") eingesetzt; letztere Anwendung benötigt Zinnoktoat als Katalysator. Darüber hinaus findet DBTDL Anwendung bei der Herstellung von Hartschäumen sowie Elastomeren/Schuhsolen, alljene Polyurethanklassen, die nicht zu den Weichschäumen gezählt werden.

Die Nacharbeitung des Ausführungsbeispiels führt nicht zu einem Weichschaum, sondern zu einem präpolymerartigen Elastomer, der keinen Schaumcharakter besitzt. Die Herstellung eines Weichschaumes setzt die Verwendung einer definierten Menge von Wasser und Aminkatalystoren zwingend voraus.

Weder Wasser noch Aminkatalysator werden in dem Ausführungsbeispiel genannt; es handelt sich somit nicht um einen Weichschaum. Die beschriebenen Schaumparameter der erhaltenen Versuchsprodukte, wie Schaumhöhe und Luftdurchlässigkeit, sind damit nicht nachvollziehbar.

Die Erfindung betrifft Formulierungen zur Herstellung von Polyurethanweichschäumen, unter denen konventionelle Polyetherweichschäume sowie Polyetherweichschäume, die mit Hilfe der Flüssig-CO₂-Technologie hergestellt wurden, zu verstehen sind.

Konventionelle Polyetherweichschäume zeichnen sich dadurch aus, dass zu ihrer Herstellung neben einem tertiären Amin als Katalysator
a) ein Metallsalz einer organischen Säure verwendet wird. Als Metalle kommen beispielsweise Alkalimetalle, Erdalkalimetalle, Al, Sn, Pb, Mn, Co, Bi und Cu in Betracht, als organische Säuren beispielsweise Oktansäure, Ricinolsäure, Essigsäure, Ölsäure, Laurinsäure und Hexansäure in Betracht.
b) Alkoholate und Phenolate verschiedener Metalle wie z.B. Ti(OR)₄, Sn(OR)₄, Sn(OR)₂, Al(OR)₃ verwendet werden, wobei R Alkyl- oder Aryl-Reste darstellen.
c) Chelatkomplexe verschiedener Metalle verwendet werden, wie man sie mit Acetylaceton, Benzoylaceton, Trifluoracetylaceton, Ethylacetoacetat, Salicylaldehyd, Cyclopentanon-2-carboxylat, Acetylacetonimin, Bisacetylaceton-alkyleniminen, Salicylaldehydimin und ähnlichen erhält. Als Metalle kommen Be, Mg, Zn, Cd, Pb, Ti, Zr, Sn, As, Bi, Cr, Mo, Mn, Fe, Co, Ni oder Ionen wie MoO₂⁺+ und UO₂⁺⁺ und ähnliche in Betracht.
d) Saure Metallsalze starker Säuren verwendet werden, wie z.B. Eisenchlorid, Zinnchlorid, Antimontrichlorid und Bismutchlorid bzw. -nitrat.

Die für Weichschäume geeigneten Polyole sind meist Polyetherpolyole, wie sie beispielsweise in US-A-3 346 557 beschrieben sind und Polymerpolyole, wie beispielsweise in den Schriften US-Re-28 715 und US-A-3 346 557, US-A-3 823 201, US-A-3 850 861, US-A-4 454 255, US-A-4 458 038, US-A-4 550 194, US-A-4 390 645 sowie US-A-4 431 754 beschrieben. Die vorzugsweise zur Anwendung kommenden Polyole sind trifunktionell und besitzen überwiegend sekundäre OH-Gruppen.

Die Aufgabe der vorliegenden Erfindung besteht insbesondere in der Bereitstellung von verbesserten Stabilisatorsystemen bei der Herstellung von Polyurethanweichschaum.

Überraschenderweise wurde gefunden, dass synergistisch wirkende Mischungen von Polyethersiloxanen mit kleinen Mengen (0,1 bis 30 % vorzugsweise 5 bis 10 % bezogen auf die Polyethersiloxane) verzweigter Fettalkohole und ihren Derivaten hiervon einen deutlich effektiveren Einfluss auf die Zellverfeinerung besitzen, als die Polyethersiloxane alleine. Dabei ist die simultane Anwendung der Bestandteile der Mischung von entscheidender Bedeutung. Die separate Dosierung des verzweigten Fettalkohols, beispielsweise über die Polyolkomponente führt nicht zu dem gewünschten Effekt.

Die beanspruchten Mischungen können ferner Lösemittel, wie ein Mono-, Di-, oder Triol eines Polyethers, eines Glykols mit niedrigem Molekulargewicht oder eines nichtionischen Tensids enthalten. Diese Lösemittel haben selbst keinen Einfluss auf die tensidischen Eigenschaften des Polyethersiloxans in der Weichschaumformulierung *per se,* stellen aber ein in der Polyurethanformulierung chemisch reaktives Material dar, das in der beanspruchten Mischung enthalten sein kann.

### Polyethersiloxane:

Bei den dieser Erfindung zugrundeliegenden Polyethersiloxanen handelt es sich um Polysiloxan-Polyoxyalkylen-Copolymere, die modifizierte Polyoxyalkylenbausteine enthalten.

Grundsätzlich sind all jene Strukturen eingeschlossen, die generell bei der Herstellung von Polyurethanweichschäumen eingesetzt werden können. Entscheidend für die synergistische Wirkung der beiden Mischungskomponenten ist allerdings die Verwendung eines Polyethersiloxans, das vorzugsweise eine gewisse Nukleierungsunterstützung besitzt, das heißt bei alleiniger Verwendung bereits eine befriedigende Zellstruktur ergibt. Mit Polyethersiloxanen, die allein eingesetzt eine grobe Zellstruktur ergeben, lassen sich dagegen häufig keine synergistisch wirkenden Mischungen im Sinne der Erfindung herstellen.

Beispielsweise eignen sich hydrophobe Stabilisatoren besonders zum Erreichen einer feinen Zellstruktur, demgegenüber führen hydrophile Vertreter strukturbedingt zu einer eher groben Zelle, alleine angewandt oder in Abmischungen mit dem erfindungsgemäßen Alkohol.

Der Polyoxyalkylenblock kann über eine hydrolysestabile SiC-Bindung oder über eine weniger hydrolysestabile SiOC-Bindung mit dem Polysiloxan verknüpft sein.

Das Polysiloxan kann bezüglich der Anzahl der Siloxaneinheiten und der Zahl der Verknüpfungsmöglichkeiten mit dem Polyoxyalkylen nahezu beliebig verändert werden.

Polysiloxan-Polyoxyalkylen-Blockcopolymere sind in zahlreichen Publikationen beschrieben.

Beispielsweise beschreibt DE-A-15 70 647 die sogenannten SiOCverknüpften Polyethersiloxane. Die Herstellung dieser Polyethersiloxanklasse wird u.a. in DE-A-10 12 602, DE-A-10 40 251, DE-A-11 20 147 sowie in US-A-3 115 512 beschrieben.

Die Herstellung der sogenannten SiC-verknüpften Polysiloxan-Polyoxyalkylen-Blockcopolymere wird beispielsweise in USA-A-2 846 458 sowie in den Auslegeschriften DE-A-12 20 615 und DE-A-11 53 166 beschrieben.

Die in der vorliegenden Erfindung eingesetzten Polyethersiloxane werden durch die allgemeine Formel I charakterisiert. 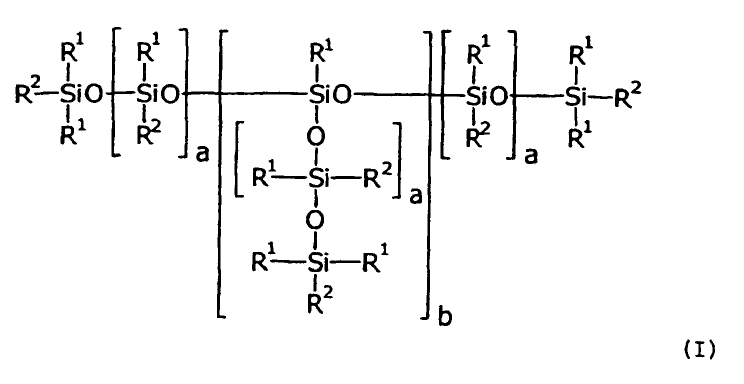 wobei die Reste
- R¹: Alkylreste oder Arylreste sind,
- R²: R¹ und/oder R³ und/oder R⁴ sind, mit der Maßgabe, dass mindestens ein Rest R² die Bedeutung R³ und/oder R⁴ hat,
- R³: ein Polyetherrest der Formel II

- (Y)ₑ[O(C₂H_{4-d}R'_{d}O)ₘ(CₓH₂ₓO)ₚZ]_{w} (II)
ist, mit der Maßgabe, dass
- e =: 0 bis 1,
- w =: 1 bis 4,
- d =: 1 bis 3,
- m =: ≥ 1,
- × =: 2 bis 4, erhältlich durch Einsatz von C₂H₄O-, C₃H₆O- und C₄H₈O-Einheiten entweder einzeln oder in Kombination, und
- p: ≥ 1 sind, und
- Y: ein (w + 1)-bindiger Kohlenwasserstoffrest ist, der gegebenenfalls verzweigt ist,
- R': ausgewählt aus der Gruppe der einwertigen, gegebenenfalls aromatischen Kohlenwasserstoffreste von C₃ bis C₁₈ ist,
- Z: ein Wasserstoffrest oder ein einwertiger organischer Rest einschließlich eines Acylrestes ist, die Summe
- m + p =: 1 bis 150 ist,
- R⁴: ein Polyetherrest der Formel III

- (F)_{f}[O(CₓH₂ₓO)ᵣZ]_{g} (III)
ist, mit der Maßgabe, dass
- f =: 0 oder 1,
- x =: 2 bis 4,
- g =: 1 bis 4 und
- r =: ≥ 1 sind,
- F: ein (g + 1)-bindiger Kohlenwasserstoffrest ist, der auch verzweigt sein kann,
- a: eine Zahl von 1 bis 100 ist, wenn b eine Zahl von 6 bis 8 ist,
- a: eine Zahl von 1 bis 200 ist, wenn b eine Zahl von 3 bis 6 ist,
- a: eine Zahl von 1 bis 300 ist, wenn b eine Zahl von 0 bis 3 ist,
- b =: 0 bis 8.

Besonders bevorzugt im Sinne der vorliegenden Erfindung werden Polysiloxane der allgemeinen Formel I eingesetzt, die dadurch gekennzeichnet sind, daß die Indizes e und/oder f = 0 sind. Dementsprechend handelt es sich hierbei um SiOC-Strukturen.

Besonders bevorzugt im Sinne der vorliegenden Erfindung ist es, Polyethersiloxane der allgemeinen Formel I einzusetzen, die dadurch gekennzeichnet sind, dass R² in wenigstens einem Fall gleich R³ ist, mit der Maßgabe, dass m > p ist.

Alternativ dazu ist es in gleicher Weise bevorzugt, Polysiloxane der allgemeinen Formel I einzusetzen, die dadurch gekennzeichnet sind, dass die Indizes e und f = 1 sind. Hierbei handelt es sich demgemäß um SiC-Strukturen.

Bei den der Erfindung zugrundeliegenden Alkohole und Derivate handelt es sich um Verbindungen des Typs der Formel IV

R-CH₂-O-R' (IV)

wobei
- R =: verzweigter Alkylrest mit mindestens 7 C-Atomen und bis zu 26 C-Atomen und
- R' =: H, Acyl- oder R³ wie oben definiert steht.

Die in dieser Erfindung eingesetzten verzweigten Alkohole und Derivate der Formel IV weisen eine Alkylkette R von wenigstens 8 Kohlenstoffatomen auf mit der Maßgabe, dass die Kette mindestens eine Verzweigung besitzt.

Die einzusetzenden Alkohole und Derivate müssen keinen tensidischen Charakter aufweisen, um den erfindungsgemäßen Effekt zu erzielen.

Beispiele für die beanspruchten Verbindungen stellen die kommerziell erhältlichen Guerbet- und Ziegler-Alkohole sowie natürlich verzweigte, Oxo- und Isotridecylalkohole dar.

Besonders bevorzugt im Sinne der vorliegenden Erfindung wird das Gemisch aus Polysiloxan der allgemeinen Formel I und verzweigtem Alkohol bei der Herstellung von Polyurethanweichschäumen eingesetzt, die flüssiges Kohlendioxid als Treibmittel umfassen.

Besonders bevorzugt im Sinne der vorliegenden Erfindung werden die Gemische aus Polysiloxan der allgemeinen Formel I und verzweigtem Alkohol und ihrer Derivate gemäß der allgemeinen Formel IV in einer Menge von 0,3 bis 3 %, bezogen auf die Polyurethanweichschaum-Formulierung eingesetzt.

Ein weiterer Gegenstand der vorliegenden Erfindung umfasst Gemische aus organofunktionellen modifizierten Polysiloxanen der allgemeinen Formel I 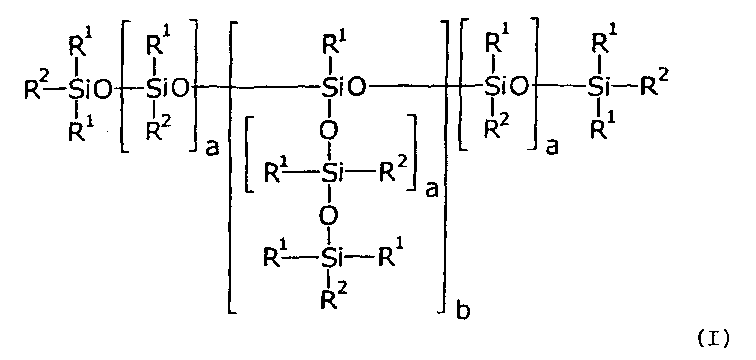 wobei die Reste
- R¹: Alkylreste oder Arylreste sind,
- R²: R¹ und/oder R³ und/oder R⁴ sind, mit der Maßgabe, dass mindestens ein Rest R² die Bedeutung R³ und/oder R⁴ hat,
- R³: ein Polyetherrest der Formel II

- (Y)ₑ[O(C₂H_{4-d}R' _{d}O)ₘ(CₓH₂ₓO)ₚZ]_{w} (II)
ist, mit der Maßgabe, dass
- e =: 0 bis 1,
- w =: 1 bis 4,
- d =: 1 bis 3,
- m =: ≥ 1,
- x =: 2 bis 4, erhältlich durch Einsatz von C₂H₄O-, C₃H₆O- und C₄H₈O-Einheiten entweder einzeln oder in Kombination, und
- p =: ≥ 1 sind, und
- Y: ein (w + 1)-bindiger Kohlenwasserstoffrest ist, der gegebenenfalls verzweigt ist,
- R': ausgewählt aus der Gruppe der einwertigen, gegebenenfalls aromatischen Kohlenwasserstoffreste von C₃ bis C₁₈ ist,
- Z: ein Wasserstoffrest oder ein einwertiger organischer Rest einschließlich eines Acylrestes ist,
die Summe
m + p = 1 bis 150 ist,
- R⁴: ein Polyetherrest der Formel III

- (F)_{f}[O(CₓH₂ₓO)ᵣZ]_{g} (III)

ist, mit der Maßgabe, dass
f = 0 oder 1,
x = 2 bis 4,
g = 1 bis 4 und
r = ≥ 1 sind,
F = ein (g + 1)-bindiger Kohlenwasserstoffrest ist, der auch verzweigt sein kann,
a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist,
b = 0 bis 8, mit der Maßgabe, dass wenigstens einer der Indices e und/oder f = 0 ist
und verzweigte Alkohole und ihre Derivate der allgemeinen Formel IV

R-CH₂-O-R' (IV)
wobei
R = verzweigter Alkylrest mit 7 bis 26 C-Atomen und
R' = H, Acyl- oder R³ wie oben definiert steht,
einsetzt.

### Ausführungsbeispiele

Ein Polyurethanweichschaum wurde in einer 27 x 27 cm großen offenen Holzkiste mit einer Wandhöhe von 27 cm durch Verschäumung einer Polyurethanformulierung mit folgenden Bestandteilen produziert:
- 100 Teile: eines trifunktionellen Polypropylenglykols der OH-Zahl 56 (Desmophen® 7186)
- 4,05 Teile: Wasser
- 0,15 Teile: Tegoamin®DMEA
- 0,05 Teile: N-Ethyl-Morpholin
- 0,2 Teile: Zinnoktoat
- 3,0 Teile: eines physikalischen Treibmittels (Dichlormethan)

und einer, bezogen auf in der Formulierung vorhandenen Hydroxylgruppen, 1,12 molaren Menge an Isocyanatgruppen in Form des als T 80 bezeichneten 80 : 20 kommerziell erhältlichen Gemisches der 2,4- und 2,6-Isomeren des Toluoldiisocyanates.

Dabei wurde als schaumstabilisierendes Agens ein durch Hydrosilylierung von Si-H-Gruppen-haltigen Siloxanen mit allylgestarteten Polyethern erhältliches Silicon-Polyether-Copolymer mit der Handelsbezeichnung Tegostab B 8123 entsprechend einem SiC-Polyethersiloxan, wie in US-A-5 321 051 beschrieben, zur Stabilisierung der entstehenden Schäume eingesetzt. In den erfindungsgemäßen Beispielen wurde dieser Stabilisator mit geringen Mengen eines verzweigten Fettalkohols abgemischt, während in den nicht Vergleichsversuchen das pure Produkt oder die Abmischung mit Abmischkomponenten verwendet wurde oder der verzweigte Alkohol nicht mit dem Stabilisator abgemischt, sondern separat der Formulierung, beispielsweise dem Polyol, zugesetzt wurde. Nach dem Aushärten des Schaumes wurde der erhaltene Schaumkörper horizontal geschnitten und die in einer Höhe von 15 cm oberhalb des Schaumbodens an der Schnittfläche gefundene Zellstruktur bewertet. Bewertungskriterien waren dabei sowohl die Zahl der Zellen/cm als auch die Regelmäßigkeit der erhaltenen Zellstruktur. Zusätzlich wurde als Maß für die Offenzelligkeit der erhaltenen Schäume der Staudruck gemessen, der sich beim Durchströmen der Schaumprobe mit 8 Litern pro Minute bei einer kreisförmigen Zuleitung mit 2 cm Durchmesser ergibt. Je niedriger der gemessene Staudruck ist, desto offenzelliger ist der erhaltene Schaum.

Es wurden folgende Ergebnisse erhalten:

| Bspl. | Konzentration an Tegostab B 8123 [Teile] | Additiv 1/Menge [Teile] | Additiv 2/Menge (Teile) | Zellstruktur | Zellfeinheit [Anzahl Zellen pro cm] | Staudruck [mm Wassersäule] |
|---|---|---|---|---|---|---|
| Vgl. 1 | 0,38 | keines | - | leicht unregelmäßig | 6 | 33 |
| Vgl. 2 | 0,38 | Dipropylenglykol/ 0,22 | - | leicht unregelmäßig | 7 | 23 |
| Vgl. 3 | 0,38 | Dipropylenglykol/ 0,22 | Isostearylalkohol separat zugegeben/ 0,06 | leicht unregelmäßig | 6-7 | 15 |
| Vgl.4 | 0,38 | Dipropylenglykol/ 0,16 | Propylencarbonat/ 0,06 | leicht unregelmäßig | 10 | 17 |
| Bspl. | 0,38 | Dipropylenglykol/ 0,16 | Isostearylalkohol/ 0,06 | regelmäßig | 14 | 21 |
| Bspl. 2 | 0,38 | Dipropylenglykol/ 0,16 | Isododecylalkohol/ 0,06 | regelmäßig | 13-14 | 19 |

Es zeigt sich deutlich, dass die Verwendung verzweigter Alkohole als Komponente eines Weichschaumstabilisators einen überraschend positiven Effekt auf die Feinzelligkeit und Regelmäßigkeit der erhaltenen Polyurethanschäume hat. Dieser Effekt konnte auch bei Maschinenversuchen mit flüssigem, unter Druck stehendem CO₂ als Treibmittel (entsprechend dem CarDio®- , Novaflex™ oder Beamech™-Verfahren) belegt werden.

Dabei wurde eine Rezeptur analog des vorgenannten Beispiels mit 4,8 Teilen wasser und 2 Teilen CO₂ auf einer Novaflek™-Anlage verschäumt. Als Stabilisator wurde jeweils ein hochaktiver Stabilisator entsprechend EP-A-0 585 771 eingesetzt. Im erfindungsgemäßen Beispiel wurde Isostearylalkohol als Komponente im Stabilisator eingesetzt. Im Vergleichsbeispiel war der Anteil an Isostearylalkohol durch Dipropylenglykol ersetzt. Anschließend wurde die erhaltene Zellstruktur des Schaumes begutachtet und in die Skala fehlerfrei, leicht gestört, mäßig gestört, gestört oder stark gestört eingeordnet.

| **Zusammensetzung der Stabilisatormischung** | **Zellstruktur** |
|---|---|
| 0,9 Teile Tegostab B 8123 + 0,5 Teile Dipropylenglykol | maßig gestört |
| 0,9 Teile Tegostab B 8123 + 0,4 Teile Dipropylenglykol + 0,1 Teile Isostearylalkohol | fehlerfrei |

Es zeigte sich, dass auch unter den Bedingungen einer Verschäumung mit flüssigem CO₂ als Treibmittel wiederum der Effekt einer Verbesserung der Zellfeinheit bei Verwendung eines verzweigten Alkohols auftritt.

## Patentansprüche

1. Verfahren zur Herstellung von Polyurethanweichschäumen unter Einsatz von organofunktionellen modifizierten Polysiloxanen der allgemeinen Formel I 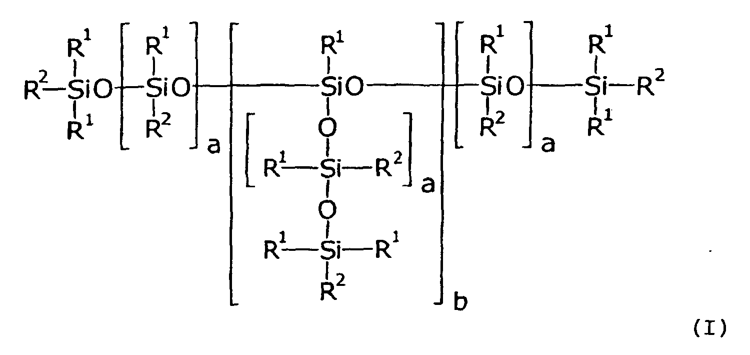 wobei die Reste
R¹ Alkylreste oder Arylreste sind,
R² R¹ und/oder R³ und/oder R⁴ sind, mit der Maßgabe, dass mindestens ein Rest R² die Bedeutung R³ und/oder R⁴ hat,
R³ ein Polyetherrest der Formel II
-(Y)ₑ[O(C₂H_{4-d}R'_{d}O)ₘ(CₓH2ₓO)ₚZ]_{w} (II)
ist, mit der Maßgabe, dass
e = 0 bis 1,
w = 1 bis 4,
d = 1 bis 3,
m ≥ 1,
x = 2 bis 4, erhältlich durch Einsatz von C₂H₄O-, C₃H₆O- und C₄H₈O-Einheiten entweder einzeln oder in Kombination, und
p ≥ 1 sind, und
Y ein (w + 1)-bindiger Kohlenwasserstoffrest ist, der gegebenenfalls verzweigt ist,
R' ausgewählt aus der Gruppe der einwertigen, gegebenenfalls aromatischen Kohlenwasserstoffreste von C₃ bis C₁₈ ist,
Z ein Wasserstoffrest oder ein einwertiger organischer Rest ist,
die Summe
m + p = 1 bis 150 ist,
R⁴ ein Polyetherrest der Formel III
-(F)_{f}[O(CₓH₂ₓO)ᵣZ]₉ III)
ist, mit der Maßgabe, dass
f = 0 oder 1,
x = 2 bis 4,
g = 1 bis 4 und
r ≥ 1 sind,
F ein (g + 1)-bindiger Kohlenwasserstoffrest ist, der auch verzweigt sein kann,
a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist,
b = 0 bis 8,
**dadurch gekennzeichnet, dass** man die Polysiloxane der allgemeinen Formel I im Gemisch mit Verbindungen der Formel IV
R-CH₂-O-R' (IV)
wobei
R = verzweigter Alkylrest mit 7 bis 26 C-Atomen und
R' = H, Acyl- oder R³ wie oben definiert steht,
einsetzt.

2. Verfahren nach Anspruch 1, **dadurch gekennzeichnet, dass** man Polysiloxane der allgemeinen Formel I einsetzt, die **dadurch gekennzeichnet sind, dass** e und/oder f = 0 ist.

3. Verfahren nach Anspruch 1, **dadurch gekennzeichnet, dass** man Polysiloxane der allgemeinen Formel I einsetzt, die **dadurch gekennzeichnet sind, dass** e und f = 1 ist.

4. Verfahren nach Anspruch 3, **dadurch gekennzeichnet, dass** man Polyethersiloxane der allgemeinen Formel I einsetzt, die **dadurch gekennzeichnet sind, dass** R² in wenigstens einem Fall gleich R³ ist, mit der Maßgabe, dass m > p ist.

5. Verfahren nach einem der Ansprüche 1 bis 4, **dadurch gekennzeichnet, dass** man weiterhin unter Druck stehendes Kohlendioxid als Treibmittel einsetzt.

6. Verfahren nach einem der Ansprüche 1 bis 5, **dadurch gekennzeichnet, dass** man verzweigte Alkohole einsetzt, die ausgewählt sind aus Guerbet- und Ziegler-Alkoholen, insbesondere verzweigten Oxo- und Isotridecylalkoholen.

7. Verfahren nach einem der Ansprüche 1 bis 6, **dadurch gekennzeichnet, dass** man die Alkohole der allgemeinen Formel IV in einer Menge von 0,1 bis 30 Gew.-%, insbesondere 5 bis 10 Gew.-%, bezogen auf die Menge der Polysiloxane der allgemeinen Formel I einsetzt.

8. Verfahren nach einem der Ansprüche 1 bis 7, **dadurch gekennzeichnet, dass** man die Gemische aus Polysiloxan und verzweigtem Alkohol in einer Menge von 0,3 bis 3 % bezogen auf die Polyurethanweichschaum-Formulierung einsetzt.

9. Gemische aus organofunktionell modifizierten Polysiloxanen der allgemeinen Formel I 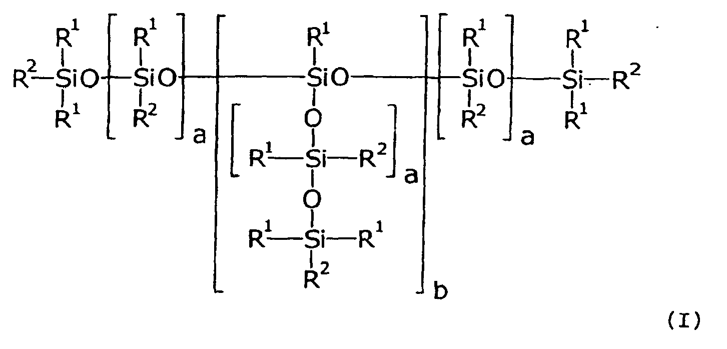 wobei die Reste
R¹ Alkylreste oder Arylreste sind,
R² R¹ und/oder R³ und/oder R⁴ sind, mit der Maßgabe, dass mindestens ein Rest R² die Bedeutung R³ und/oder R⁴ hat,
R³ ein Polyetherrest der Formel II
- (Y)ₑ[O(C₂H_{4-d}R'_{d}O)ₘ(CₓH₂ₓO)ₚZ]_{w} (II)
ist, mit der Maßgabe, dass
e = 0 bis 1,
w = 1 bis 4,
d = 1 bis 3,
m ≥ 1,
x = 2 bis 4, erhältlich durch Einsatz von C₂H₄O-, C₃H₆O- und C₄H₈O-Einheiten entweder einzeln oder in Kombination, und
p ≥ 1 sind, und
Y ein (w + 1)-bindiger Kohlenwasserstoffrest ist, der gegebenenfalls verzweigt ist,
R' ausgewählt aus der Gruppe der einwertigen, gegebenenfalls aromatischen Kohlenwasserstoffreste von C₃ bis C₁₈ ist,
Z ein Wasserstoffrest oder ein einwertiger organischer Rest einschließlich eines Acylrestes ist,
die Summe
m + p = 1 bis 150 ist,
R⁴ ein Polyetherrest der Formel III
-(F')_{f}[O,(CₓH₂ₓO)ᵣZ]_{g} (III)
ist, mit der Maßgabe, dass
f = 0 oder 1,
x = 2 bis 4,
g = 1 bis 4 und
r ≥ 1 sind,
F ein (g + 1)-bindiger Kohlenwasserstoffrest ist, der auch verzweigt sein kann,
a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist,
b = 0 bis 8,
mit der Maßgabe, dass wenigstens einer der Indices e und/oder f = 0 ist,
und verzweigte Alkohole und ihre Derivate der allgemeinen Formel IV
R-CH₂-O-R' (IV)
wobei
R = verzweigter Alkylrest mit 7 bis 26 C-Atomen und
R' = H, Acyl- oder R³ wie oben definiert steht,
einsetzt.

10. Gemische nach Anspruch 9, **dadurch gekennzeichnet, dass** die Polyethersiloxane der allgemeinen Formel I ausgewählt sind aus Verbindungen, in der R² in wenigstens einem Fall gleich R³ ist, mit der Maßgabe, dass m > p ist.

11. Gemische nach Anspruch 9 oder 10, **dadurch gekennzeichnet, dass** diese Guerbet- und Ziegler-Alkoholen, insbesondere verzweigte Oxo- und Isotridecylalkohole enthalten.

12. Gemische nach einem der Ansprüche 9 bis. 11, **dadurch gekennzeichnet, dass** diese Alkohole der allgemeinen Formel IV in einer Menge von 0,1 bis 30 Gew.-%, insbesondere 5 bis 10 Gew.-%, bezogen auf die Menge der Polysiloxane der allgemeinen Formel I enthalten.

## Claims

1. Process for producing flexible polyurethane foams using organofunctionally modified polysiloxanes of the formula I, 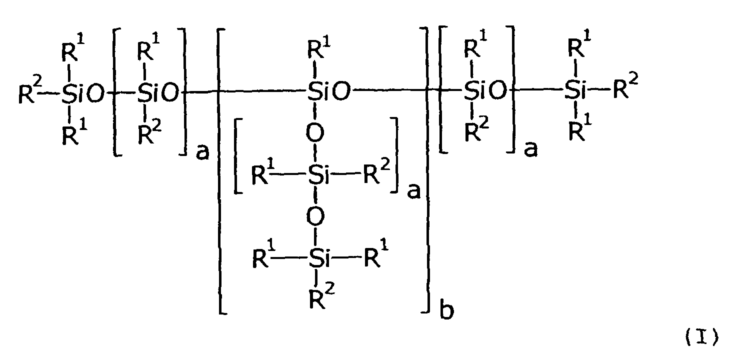 where the radicals
R¹ are alkyl radicals or aryl radicals,
R² are R¹ and/or R³ and/or R⁴, with the proviso that at least one radical R² has the meaning R³ and/or R⁴,
R³ is a polyether radical of the formula II
- (Y)ₑ[O(C2H_{4-d}R'_{d}O)ₘ(CₓH₂ₓO)ₚZ]_{w} (II)
with the proviso that
e = 0 to 1,
w = 1 to 4,
d = 1 to 3,
m ≥ 1,
x = 2 to 4, obtainable by the use of C₂H₄O-, C₃H₆O- and C₄H₈O units either individually or in combination, and
p ≥ 1, and
Y is a (w + 1)-valent hydrocarbon radical which may be branched,
R' is selected from the group consisting of monovalent, aliphatic or aromatic hydrocarbon radicals having from 3 to 18 carbon atoms,
Z is hydrogen or a monovalent organic radical, the sum
m + p = 1 to 150,
R⁴ is a polyether radical of the formula III
-(F)_{f}[O(CₓH₂ₓO)ᵣZ]_{g} (III)
with the proviso that
f = 0 or 1,
x = 2 to 4,
g = 1 to 4 and
r ≥ 1,
F is a (g + 1)-valent hydrocarbon radical which may be branched,
a is from 1 to 100 when b is from 6 to 8,
a is from 1 to 200 when b is from 3 to 6,
a is from 1 to 300 when b is from 0 to 3,
b = 0 to 8,
**characterized in that** the polysiloxanes of the formula I are used in admixture with compounds of the formula IV
R-CH₂-O-R' (IV)
where
R = a branched alkyl radical having from 7 to 26 carbon atoms and
R' = H, acyl or R³ as defined above.

2. Process according to Claim 1, **characterized in that** polysiloxanes of the formula I in which e and/or f = 0 are used.

3. Process according to Claim 1, **characterized in that** polysiloxanes of the formula I in which e and f = 1 are used.

4. Process according to Claim 3, **characterized in that** polyether siloxanes of the formula I in which R² in at least one case is R³, with the proviso that m > p, are used.

5. Process according to any of Claims 1 to 4, **characterized in that**, in addition, pressurized carbon dioxide is used as blowing agent.

6. Process according to any of Claims 1 to 5, **characterized in that** branched alcohols selected from among Guerbet and Ziegler alcohols, in particular branched oxo and isotridecyl alcohols, are used.

7. Process according to any of Claims 1 to 6, **characterized in that** the alcohols of the formula IV are used in an amount of from 0.1 to 30% by weight, in particular from 5 to 10% by weight, based on the amount of polysiloxanes of the formula I.

8. Process according to any of Claims 1 to 7, **characterized in that** the mixtures of polysiloxane and branched alcohol are used in an amount of from 0.3 to 3%, based on the flexible polyurethane foam formulation.

9. Mixtures of organofunctionally modified polysiloxanes of the general formula I 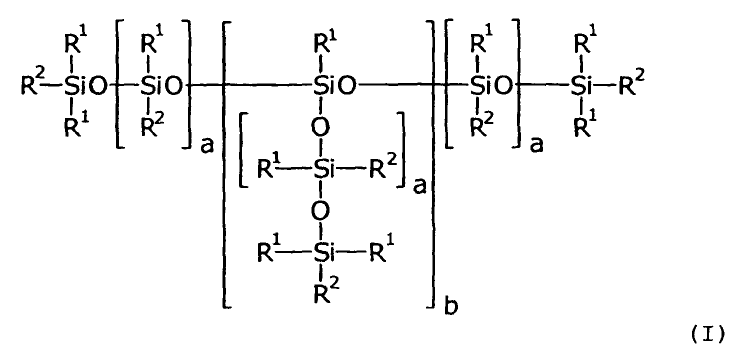 where the radicals
R¹ are alkyl radicals or aryl radicals,
R² are R¹ and/or R³ and/or R⁴, with the proviso that at least one radical R² has the meaning R³ and/or R⁴,
R³ is a polyether radical of the formula II
-(Y)ₑ[O(C2H_{4-d}R'_{d}O)ₘ(CₓH₂ₓO)ₚZ]_{w} (II)
with the proviso that
e = 0 to 1,
w = 1 to 4,
d = 1 to 3,
m ≥ 1,
x = 2 to 4, obtainable by the use of C₂H₄O-, C₃H₆O- and C₄H₈O units either individually or in combination, and
p ≥ 1, and
Y is a (w + 1)-valent hydrocarbon radical which may be branched,
R' is selected from the group consisting of monovalent, aliphatic or aromatic hydrocarbon radicals having from 3 to 18 carbon atoms,
Z is hydrogen or a monovalent organic radical including an acyl radical,
the sum
m + p = 1 to 150,
R⁴ is a polyether radical of the formula III
-(F)_{f}[O(CₓH₂ₓO)ᵣZ]_{g} (III)
with the proviso that
f = 0 or 1,
x = 2 to 4,
g = 1 to 4 and
r ≥ 1,
F is a (g + 1)-valent hydrocarbon radical which also may also be branched,
a is from 1 to 100 when b is from 6 to 8,
a is from 1 to 200 when b is from 3 to 6,
a is from 1 to 300 when b is from 0 to 3,
b = 0 to 8,
with the proviso that at least one of the indices e and/or f = 0,
and branched alcohols and derivatives thereof of the formula IV
R-CH₂-O-R' (IV)
where
R = a branched alkyl radical having from 7 to 26 carbon atoms and
R' = H, acyl or R³ as defined above.

10. Mixtures according to Claim 9, **characterized in that** the polyether siloxanes of the formula I are selected from among compounds in which R² in at least one case is R³, with the proviso that m > p.

11. Mixtures according to Claim 9 or 10 **characterized in that** Guerbet and Ziegler alcohols, in particular branched oxo and isotridecyl alcohols, are present.

12. Mixtures according to any of Claims 9 to 11 **characterized in that** alcohols of the formula IV are present in an amount of from 0.1 to 30% by weight, in particular from 5 to 10% by weight, based on the amount of polysiloxanes of the formula I.

## Revendications

1. Procédé pour la préparation de mousses souples de polyuréthanne avec utilisation de polysiloxanes modifiés par des fonctions organiques, de formule générale I 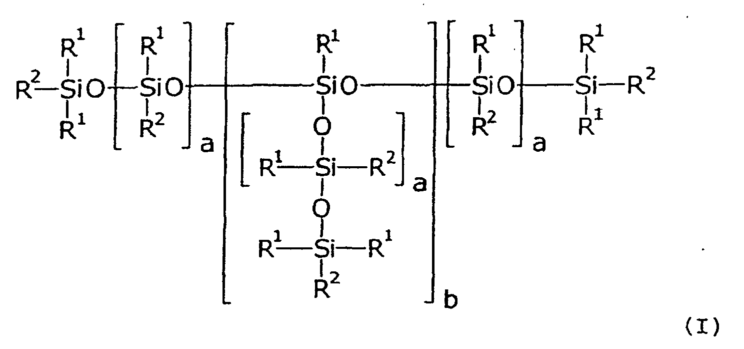 dans laquelle les radicaux
R¹ sont des radicaux alkyle ou aryle,
R² sont R¹ et/ou R³ et/ou R⁴, étant entendu qu'au moins un radical R² a la signification de R³ et/ou de R⁴,
R³ est un radical polyéther de formule II
- (Y)ₑ[O(C₂H_{4-d}R'_{d}O)ₘ(CₓH₂ₓO)ₚZ]_{w} (II)
étant entendu que
e = 0 à 1,
w = 1 à 4,
d = 1 à 3,
m ≥ 1,
x = 2 à 4, pouvant être obtenu par utilisation de motifs C₂H₄O-, C₃H₆O- et C₄H₈O-soit seuls soit en combinaison, et
p ≥ 1, et
Y est un radical hydrocarboné à (w + 1) liaisons, qui est éventuellement ramifié,
R' est choisi dans le groupe des radicaux hydrocarbonés monovalents en C₃-C₁₈, éventuellement aromatiques,
Z est un atome d'hydrogène ou un radical organique monovalent,
la somme m + p va de 1 à 150,
R⁴ est un reste polyéther de formule III
- (F)_{f}[O(CₓH₂ₓO)ᵣZ]_{g} (III)
étant entendu que
f = 0 ou 1,
x = 2 à 4,
g = 1 à 4 et
r = ≥ l,
F est un radical hydrocarboné à (g + l) liaisons, qui peut également être ramifié,
a est un nombre allant de 1 à 100 lorsque b est un nombre allant de 6 à 8,
a est un nombre allant de 1 à 200 lorsque b est un nombre allant de 3 à 6,
a est un nombre allant de 1 à 300, lorsque b est un nombre allant de 0 à 3,
b = 0 à 8,
**caractérisé en ce qu'**on utilise les polysiloxanes de formule générale I en mélange avec des composés de formule IV
R-CH₂-O-R' (IV)
où
R est un radical alkyle ramifié ayant de 7 à 26 atomes de carbone et
R' est H, un groupe acyle ou R³ tel que défini plus haut.

2. Procédé selon la revendication 1, **caractérisé en ce qu'**on utilise des polysiloxanes de formule générale I qui sont **caractérisés en ce que** e et/ou f = 0.

3. Procédé selon la revendication 1, **caractérisé en ce qu'**on utilise des polysiloxanes de formule générale I qui sont **caractérisés en ce que** e et f = l.

4. Procédé selon la revendication 3, **caractérisé en ce qu'**on utilise des polyéthersiloxanes de formule générale I qui sont **caractérisés en ce que** R² est dans au moins un cas identique à R³, étant entendu que m > p.

5. Procédé selon l'une quelconque des revendications 1 à 4, **caractérisé en ce qu'**en outre on utilise en tant que propulseur du dioxyde de carbone sous pression.

6. Procédé selon l'une quelconque des revendications 1 à 5, **caractérisé en ce qu'**on utilise des alcools ramifiés, qui sont choisis parmi les alcools de Guerbet et de Ziegler, en particulier des oxoalcools et l'alcool isotridécylique.

7. Procédé selon l'une quelconque des revendications 1 à 6, **caractérisé en ce qu'**on utilise les alcools de formule générale IV en une quantité de 0,1 à 30 % en poids, en particulier de 5 à 10 % en poids, par rapport à la quantité des polysiloxanes de formule générale I.

8. Procédé selon l'une quelconque des revendications 1 à 7, **caractérisé en ce qu'**on utilise les mélanges de polysiloxane et d'alcool ramifié en une quantité de 0,3 à 3 %, par rapport à la composition de mousse souple de polyuréthanne.

9. Mélanges de polysiloxanes modifiés par des fonctions organiques, de formule générale I 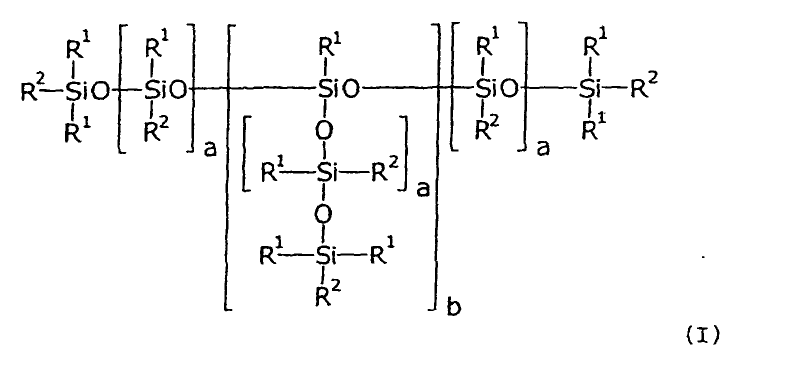 dans laquelle les radicaux
R¹ sont des radicaux alkyle ou aryle,
R² sont R¹ et/ou R³ et/ou R⁴, étant entendu qu'au moins un radical R² a la signification de R³ et/ou de R⁴,
R³ est un radical polyéther de formule II
-(Y)ₑ[O(C₂H_{4-d}R'_{d}O)ₘ(CₓH₂ₓO)ₚZ]_{w} (II)
étant entendu que
e = 0 à 1,
w = 1 à 4,
d = 1 à 3,
m ≥ 1,
x = 2 à 4, pouvant être obtenu par utilisation de motifs C₂H₄O-, C₃H₆O- et C₄H₈O-soit seuls soit en combinaison, et
p ≥ 1, et
Y est un radical hydrocarboné à (w + 1) liaisons, qui est éventuellement ramifié,
R' est choisi dans le groupe des radicaux hydrocarbonés monovalents en C₃-C₁₈, éventuellement aromatiques,
Z est un atome d'hydrogène ou un radical organique monovalent, à l'exclusion d'un radical acyle,
la somme m + p va de 1 à 150,
R⁴ est un reste polyéther de formule III
- (F)_{f}[O(CₓH₂ₓO)ᵣZ]_{g} (III)
étant entendu que
f = 0 ou 1,
x = 2 à 4,
g = 1 à 4 et
r = ≥ 1,
F est un radical hydrocarboné à (g + 1) liaisons, qui peut également être ramifié,
a est un nombre allant de 1 à 100 lorsque b est un nombre allant de 6 à 8,
a est un nombre allant de 1 à 200 lorsque b est un nombre allant de 3 à 6,
a est un nombre allant de 1 à 300, lorsque b est un nombre allant de 0 à 3,
b = 0 à 8,
étant entendu qu'au moins un des indices e et/ou f = 0, et d'alcools ramifiés et de leurs dérivés de formule générale IV
R-CH₂-O-R' (IV)
où
R est un radical alkyle ramifié ayant de 7 à 26 atomes de carbone et
R' est H, un groupe acyle ou R³ tel que défini plus haut.

10. Mélanges selon la revendication 9, **caractérisés en ce que** les polyéthersiloxanes de formule générale I sont choisis parmi les composés dans lesquels R² est dans au moins un cas identique à R³, étant entendu que m > p.

11. Mélanges selon la revendication 9 ou 10, **caractérisés en ce qu'**ils contiennent des alcools de Guerbet et de Ziegler, en particulier des oxoalcools et l'alcool isotridécylique.

12. Mélanges selon l'une quelconque des revendications 9 à 11, **caractérisés en ce qu'**ils contiennent des alcools de formule générale IV en une quantité de 0,1 à 30 % en poids, en particulier de 5 à 10 % en poids, par rapport à la quantité des polysiloxanes de formule générale I.
